**Europäisches Patentamt**

**European Patent Office**

**Office européen des brevets**

(19)

(11) Veröffentlichungsnummer: **0 121 093**
**B1**

(12) **EUROPÄISCHE PATENTSCHRIFT**

(45) Veröffentlichungstag der Patentschrift:
**07.12.88**

(51) Int. Cl.⁴: **G 11 B 5/84**

(21) Anmeldenummer: **84102048.0**

(22) Anmeldetag: **28.02.84**

(54) Verfahren zur Herstellung eines magnetischen Aufzeichnungsmaterials mit Senkrechtausrichtung.

(30) Priorität: **08.03.83 DE 3308052**

(43) Veröffentlichungstag der Anmeldung:
**10.10.84 Patentblatt 84/41**

(45) Bekanntmachung des Hinweises auf die Patenterteilung:
**07.12.88 Patentblatt 88/49**

(84) Benannte Vertragsstaaten:
**DE FR GB NL**

(56) Entgegenhaltungen:
**EP-A- 0 005 845**
**DE-A- 2 008 325**
**DE-A- 3 217 211**
**DE-A- 3 347 466**

(73) Patentinhaber: **Agfa-Gevaert AG, Patentabteilung,
D-5090 Leverkusen 1 (DE)**

(72) Erfinder: **Greiner, Joachim, Dr.,
Ulrich-von-Hassel-Strasse 15, D-8026 Ebenhausen (DE)**
Erfinder: **Nippe, Burkhard, Dr., Krenner Weg 20,
D-8000 München 71 (DE)**

ACTORUM AG

**Beschreibung**

Die Erfindung betrifft ein Verfahren zur Herstellung eines magnetischen Aufzeichnungsmaterials, bestehend aus einem Schichtträger und mindestens einer darauf aufgebrachten magnetischen Aufzeichnungsschicht, welche magnetisch anisotrope Pigmente, welche im Bindemittel dispergiert sind, enthält, und wobei die magnetische Aufzeichnungsschicht nach dem Auftragen im flüssigen Suspensionszustand einer magnetischen Orientierungsbehandlung mittels eines magnetischen Feldes im wesentlichen in Richtung senkrecht zur Oberfläche der aufgetragenen Schicht und senkrecht zur Laufrichtung sowie einer Trocknungsbehandlung unterzogen wird.

Die ersten magnetischen Aufzeichnungsmaterialien von technischer Bedeutung, die aus Bindemittel mit eingebetteten magnetischen Pigmenten bekannt wurden, waren magnetisch isotrope Schichten. Es wurden kubische Eisenoxidteilchen, die in einem Bindemittel dispergiert waren, mit einem Giesser auf eine Unterlage aufgetragen. Die Giesseinrichtung enthielt keine magnetischen Elemente.

Um die Speicherdichte zu erhöhen, benutzt man seit den fünfziger Jahren längliche Pigmentteilchen, die während des Giessvorganges durch ein Magnetfeld ausgerichtet werden. Es entsteht eine magnetische Speicherschicht mit einer Vorzugsachse in Bandlaufrichtung. Diese Schichten bewährten sich 2 bis 3 Jahrzehnte, da die aufgezeichneten halben Wellenlängen stets grösser als die Schichtdicken waren.

Mit der Notwendigkeit, magnetische Impulse und Signale im 1-µm-Bereich zu fixieren, wurden Aufzeichnungsmaterialien mit senkrecht zur Oberfläche stehender magnetischer Vorzugsachse interessant. So beschreibt DP 1 258 146 (08.12.64) bereits eine solche Schicht.

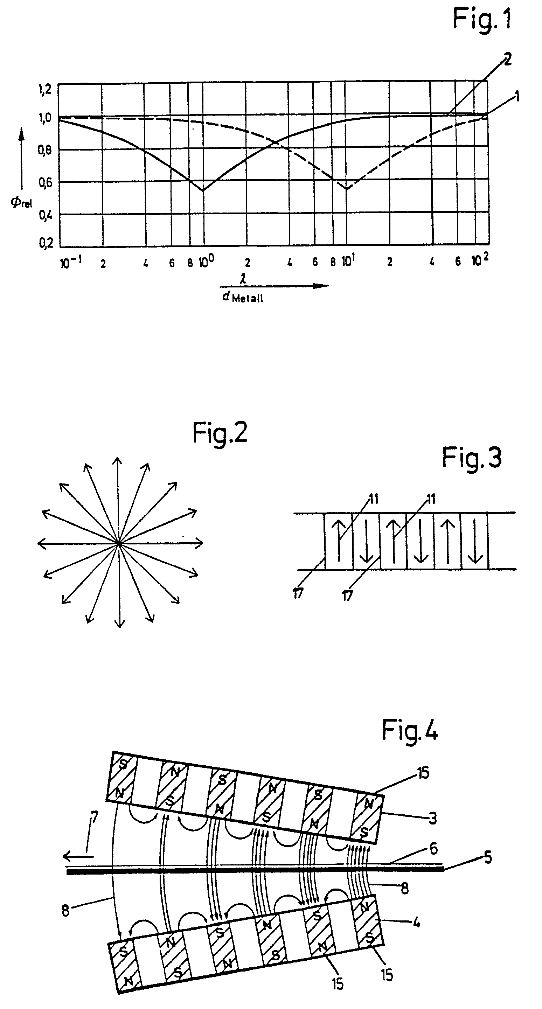

Es ist auch bekannt aus «Internationale Elektronische Rundschau» 1970 Nr. 10, Seite 251–255, Bild 5 (siehe Fig. 1), dass für kurze aufzuzeichnende Wellenlängen $\lambda$ die senkrecht zur Schichtoberfläche stehende Vorzugsrichtung von Vorteil ist. Die Fig. 1 zeigt die im zitierten Artikel wiedergegebene Abhängigkeit des remanenten Bandflusses von der Wellenlänge $\frac{\lambda}{d_m}$ für eine oxidische (——1) und eine metallische (—2) Speicherschicht. Die Hystereseschleife des Kraftflusses beider Schichten wurde als gleich angenommen. Damit ist die Schichtdicke des Metallbandes ($d_M$) ungefähr $\frac{1}{10}$ der Dicke des Oxidbandes ($d_O$). Eine isotrope Magnetschicht wird bei langen Wellenlängen ($\lambda$), bei denen $\lambda > d$ ($d$ – Schichtdicke) stets längs magnetisiert, da dieser Zustand wegen des entmagnetisierenden Feldes der energetisch günstigere ist. Mit Verringerung der Wellenlänge $\lambda$ nimmt das Verhältnis $d : \lambda$ zu und damit wegen der Scherung der Hystereseschleife die remanente Magnetisierung ab. Wird schliesslich die halbe Wellenlänge gleich der Schichtdicke d ($\lambda/2 = d$) beginnt die senkrecht zur Bandoberfläche weisende Richtung gleichberechtigt zu werden und wird bei weiterem Abfall der Wellenlänge energetisch günstiger, so dass die Magnetisierung bevorzugt in Normalenrichtung liegt. Der remanente Fluss $\varphi$ steigt jetzt wieder an. Die Wellenlänge ist in der Darstellung auf die Schichtdicke eines Metallbandes $d_M$ (etwa 0,3 µm) bezogen.

Iwasaki hat in den letzten Jahren die Senkrechtaufzeichnung auf Metallschichten besonders auf CoCr-Schichten beschrieben, unter anderem im «Magnetmaterial für Senkrechtaufzeichnung», siehe Proceeding of 1982 Sendai Symposium on Perpendicular Magnetic Recording, März 11.–12., Seite 1–30, Vortrag No. 15, Research Institute of Electrical Communication, Sendai, Japan und «An Analysis for the Magnetization Mode for High Density Magnetic Recording» (IEEE Transaction der Magnetics Vol. on MAG 13, No. 5, 1977, S. 1272–77).

Diese Metallschichten besitzen eine magnetische Vorzugsachse in Richtung der Oberflächennormalen des Aufzeichnungsmaterials. Die Technologie der Metallschichtherstellung ist heute jedoch erst im Entstehen begriffen, während die Technologie der Oxidschichtherstellung im allgemeinen hoch perfektioniert ist. Der naheliegende Gedanke, die Vorzugsachse der magnetischen Pigmente durch ein Gleichfeld, das während des Herstellungsvorganges auf die noch flüssige Pigmentdispersion wirkt, auszurichten, wird in DE-OS 3 148 769 für Pigmente mit einem Längen-/Breitenverhältnis von kleiner 3 : 1 angegeben. Die Einschränkung zeigt, dass das Verfahren noch erhebliche Mängel aufweist. Nachteile bringt insbesondere der angewandte Temperatursturz zur Verfestigung der flüssigen Dispersion, da darunter die Homogenität der Schicht leidet. Gleichermassen ungünstig ist, dass durch das senkrecht zur noch flüssigen Speicherschicht gerichtete Gleichfeld ein extrem starkes entmagnetisierendes Feld entgegen dem Gleichfeld in der Schicht entsteht. Das wirksame Feld wird dadurch sehr geschwächt und die Senkrechtorientierung erschwert.

In DE-OS 3 217 211 ist ein weiteres Verfahren zur Erzeugung einer magnetischen Anisotropie senkrecht zur Schichtoberfläche beschrieben. Zur Unterstützung der Senkrechtorientierung durch ein Gleichfeld wird hier das magnetische Pigment einer Wärmebehandlung im Magnetfeld unterworfen. Dabei kann das Pulver vor oder nach dem Aufbringen im Gleichfeld auf den Schichtträger dieser thermomagnetischen Behandlung ausgesetzt werden. Auch diesem Patent haftet der Mangel an, dass bei Ausrichtung der Pigmente im Gleichfeld diesem ein hohes entmagnetisierendes Feld entgegenwirkt. Hinzukommt, dass bei Durchführung der thermomagnetischen Behandlung bei den auf der Folie befindlichen Pigmente hohe Forderungen an die thermische Stabilität des Schichtträgers gestellt werden müssen. Nachteilig ist auch der hohe Zeitaufwand, der für das thermomagnetische Verfahren erforderlich ist.

Die Erfindung stellt sich daher die Aufgabe, ein Verfahren zur Herstellung eines magnetischen Aufzeichnungsmaterials mit mindestens einer Schicht aus magnetischen oxidischen und/oder metallischen nadelförmigen Pigmenten mit Formanisotropie und/oder einer anderen Art der magnetischen Anisotropie z.B. Kristall-, Spannungsanisotropie, magnetfeldinduzierte Anisotropie anzugeben, mit dem eine Schicht mit Senkrechtanisotropie oder über eine anfängliche Senkrechtanisotropie Schichten mit folgenden Strukturen realisieren lassen:

1. Schichten, bei denen die magnetische Vorzugsachse der Pigmente senkrecht zur Schichtebene weist und bei deren Herstellung die oben genannten Mängel vermieden werden.

2. Herstellung räumlich isotroper Schichten aus Pigmenten mit magnetischer Vorzugsachse.

3. Herstellung von Schichten mit flächenhafter statistischer Verteilung der magnetischen Vorzugsachsen der Pigmente parallel zur Schichtebene.

4. Herstellung von Schichten mit flächenhafter statistischer Verteilung der magnetischen Vorzugsachsen der Pigmente, wobei die Verteilungsebene senkrecht zur Schichtebene und in Bandlaufrichtung liegt.

Die Aufgabe wird erfindungsgemäss gelöst durch ein Verfahren zur Herstellung eines magnetischen Aufzeichnungsmaterials der eingangs genannten Art, wobei das magnetische Aufzeichnungsmaterial (5, 6) eine Orientierungsbehandlung durch beiderseits des magnetischen Aufzeichnungsmaterials symmetrisch angeordnete identische Ketten (3, 4) von magnetischen Einzelkreisen (9, 10, 15, 16, 18), enthaltend Permanent- oder Elektromagnete, durchläuft, wobei die Polarität der Magnete der einen Kette entgegengesetzt zu der Polarität der entsprechenden Magnete der anderen Kette ist und wobei die Feldorientierung in Laufrichtung (7) laufend um 180° wechselt und wobei der Betrag der Feldstärke in Laufrichtung ständig abnimmt, so dass sich durch den Entmagnetisierungseffekt räumlich kleine Bereiche mit verringerter Streufeldenergie bilden und wobei die räumliche Orientierung der magnetischen Pigmente in der getrockneten magnetischen Schicht (6) durch Wahl des Trocknungszeitpunktes in Bezug auf die Orientierungsbehandlung im magnetischen Wechselfeld bestimmt wird.

Die Entmagnetisierungsenergie der Speicherschicht ist damit wesentlich herabgesetzt. Figur 3 zeigt derart kleine Bereiche mit wechselnder Magnetisierungsrichtung (11) und den Trennwänden (17).

Die verschiedenen Schichtstrukturen werden erfindungsgemäss durch Verlagerung des Trocknungspunktes der Schicht bezüglich der Richtfeldanordnung und erforderlichenfalls durch eine zusätzliche Feldkomponente in Aufzeichnungsrichtung erzielt. Es ergeben sich folgende Herstellungsverfahren:

Bei der Herstellung von Schichten, bei denen die magnetische Vorzugsachse in Richtung der Schichtnormalen weisen soll, lässt man die Schicht in der erfindungsgemässen Magnetfeldanordnung erstarren.

Bei der Herstellung räumlich isotroper Schichten aus magnetischen Teilchen mit einer magnetischen Vorzugsachse gibt es zwei Möglichkeiten:

Der Trocknungspunkt wird an die Stelle gelegt, an der die nasse Schicht in die Magnetanordnung einläuft, so dass eine räumlich isotrope Verteilung der Vorzugsachsen der Teilchen dadurch erreicht wird, dass nur ein Teil der Vorzugsachsen mehr oder weniger in die Schichtnormale eingedreht wird. Der Trocknungspunkt wird an die Stelle gelegt, an der die nasse Schicht die erfindungsgemässe Magnetanordnung verlässt. Die Teilchen, die in der Magnetanordnung senkrecht gestellt wurden, fallen auseinander und werden im Moment des Fallens mit mehr oder weniger grossen Abweichungen von der Normalen fixiert.

Bei der Herstellung von Schichten mit flächenhafter statistischer Verteilung der magnetischen Vorzugsachsen parallel zur Schichtebene liegt der Trocknungs- und Fixierungspunkt weit weg von der Richtanordnung. Die nasse Schicht passiert die erfindungsgemässe Anordnung zur Ausrichtung der Teilchen in Normalenrichtung der Schicht. Die Teilchen fallen dann wie die Mikadostäbchen um und liegen parallel zur Schichtoberfläche statistisch verteilt.

Die Fig. 2 zeigt die sternförmige flächenhafte statistische Verteilung der magnetischen Vorzugsachsen der Teilchen der Schicht.

Bei der Herstellung von Schichten mit flächenhafter Verteilung der magnetischen Vorzugsachsen, bei der die Verteilungsebene senkrecht zur Schichtebene und in Bandlaufrichtung liegt, erfolgt die Trocknung in einer Magnetfeldanordnung, die aber zusätzlich eine Feldkomponente in Bandlaufrichtung besitzt, deren Betrag $\frac{1}{4}$ des Betrages der Senkrechtkomponente nicht übersteigt.

Erfindungsgemäss ist das Verfahren auf kein bestimmtes magnetisches Material der Pigmente beschränkt. Es gilt beispielsweise für alle heute bekannten Magnetpigmente, wie $Fe_3O_4$, $\gamma\text{-}Fe_2O_3$, Berthollide, $CrO_2$, Metallpulver, Bariumferrite, Seltenerdmagnete.

Die magnetische Schicht ist neben den ferromagnetischen Pigmenten aus Bindemitteln, Lösungsmitteln und sonstigen Zusätzen wie Dispergatoren, Gleitmitteln, Netzmitteln zusammengesetzt. Als Bindemittel werden die üblicherweise verwendeten hochmolekularen Harze wie Polyvinylverbindungen, Polyester, Polyurethane, Cellulosederivate u.ä. eingesetzt. Als Schichtträger werden flexible und starre Materialien wie PET, Polyolefine, Cellulosederivate, nichtmagnetische Metalle wie Aluminium oder keramische Materialien wie Glas verwendet.

Es ist auch die Kombination der nach diesem Verfahren herstellbaren Schichtstrukturen, wie oben beschrieben, untereinander und mit anderen Schichtstrukturen, mit anderem Koerzitivfeld und/oder anderer Anisotropieart möglich. Hierbei sind zwei Gruppen zu unterscheiden:

Mehrfachschichten zur besseren Nutzung von Aufzeichnungs- und Abtastorganen und Mehrfachschichten, bei denen jede Schicht Träger einer anderen Information ist, z.B. Sprache und Musik.

Von besonderer Bedeutung sind Mehrfachschichten, die das Spaltfeld eines Ringkopfes nachbilden. Als Oberschicht, die direkt am Kopfspiegel anliegt, wird stets eine erfindungsgemässe Schicht mit einer Vorzugsachse in Normalenrichtung zur Schichtebene verwendet. Als Unterschicht dienen

a) Schichten mit einer magnetischen Vorzugsachse in Bandlaufrichtung. Das können gerichtete Pigmentschichten,

z.B. $\gamma$-Fe$_2$O$_3$, Fe$_3$O$_4$, CrO$_2$, Metallpulver, homo-gene Metallschichten sein. Das Koerzitivfeld H$_{CU}$ liegt zwischen dem der Senkrechtschicht H$_{CS}$ und einem $\frac{1}{4}$ davon.

b) Weichmagnetische isotrope Schichten mit niederem Koerzitivfeldern, die den magnetischen Fluss der Aufzeichnung schliessen. Es sind auch hier Pigment- und Metallschichten möglich.

Es gibt verschiedene Methoden, in einer Achse senkrecht zur Speicherschicht ein erfindungsge-mässes Magnetfeld während des Herstellungs-prozesses wirken zu lassen. Einige werden hier beispielhaft aufgeführt:

Anordnungen aus Permanentmagneten besitzen den Vorteil, dass bei der Herstellung des Auf-zeichnungsmaterials die aufwendigen Massnah-men zur Verhinderung von Explosionen des Lösemittelgemisches der magnetischen Dispersion entfallen. In Figur 4 ist das Prinzip einer solchen Anordnung dargestellt. Die Anordnung besteht aus zwei gleichen Ketten von Magneten (15), die als Magnetteppiche (3, 4) bezeichnet werden sollen. Diese Magnetteppiche liegen symmetrisch zum Schichtträger (5) mit der noch flüssigen magnetischen Aufzeichnungsschicht (6) darauf. Mit Pfeil (7) ist die Bewegungsrichtung des Schichtträgers markiert. Die Nord- (N) und Südpole (S) der Teppiche (3, 4) stehen sich stets gegenüber, so dass senkrecht zum Schichtträger (5) und Schicht (6), also der Symmetrielinie, Magnetfelder (8) entstehen, die ihre Richtung alternierend ändern. Die Stärke der Felder nimmt auf der Symmetrielinie, in der Richtung (7), in der sich die noch flüssige Schicht durch die Magnetanordnung bewegt, ab.

Bei dem Aufbau der Magnetteppiche ist zu beachten, dass das zur Ausrichtung und Entmagnetisierung dienende Feld (8) möglichst gleichmässig monoton abnimmt.

Eine Möglichkeit dies zu realisieren, besteht darin, die Fertigungsgenauigkeit als konstruktiven Schwerpunkt anzusehen. Die vielen erforderlichen Einzelteile der vielen Einzelkreise werden in Massen und magnetischen Werten gleich gefertigt. Die Abnahme des Feldes auf der Symmetrielinie erreicht man dann dadurch, dass man die beiden gleichen Magnetkreisanordnungen keilförmig auseinandergehen lässt, wie es Fig. 4 darstellt. In speziellen Fällen wird eine geringe Längskomponente gewünscht, die man erreicht durch eine leichte Verschiebung der zwei Magnetteppiche (3, 4) in Laufrichtung (7) oder durch eine Führung des Schichtträgers leicht ausserhalb der Symmetrielinie zwischen den beiden Polketten.

Eine andere Möglichkeit besteht darin, den Schwerpunkt auf eine optimale Feldgeometrie der gesamten Richt- und Entmagnetisierungsstrecke zu legen.

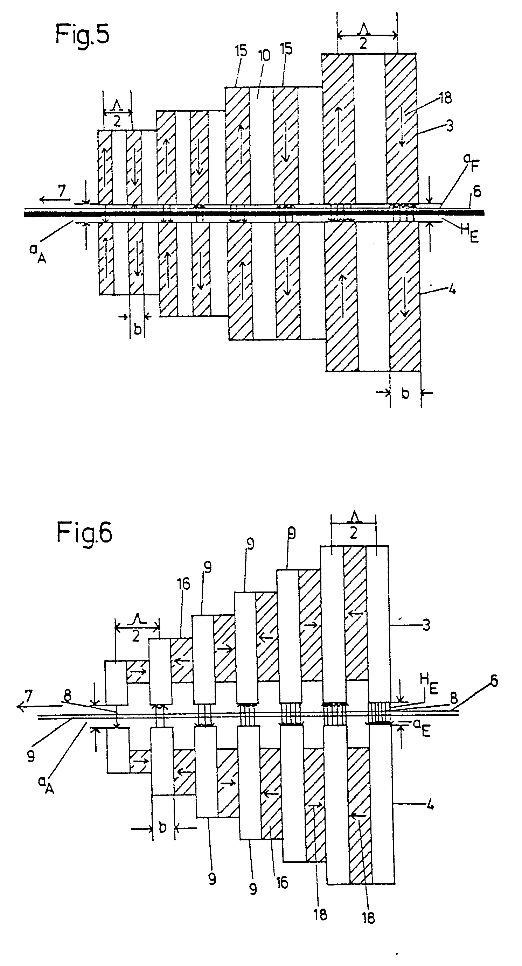

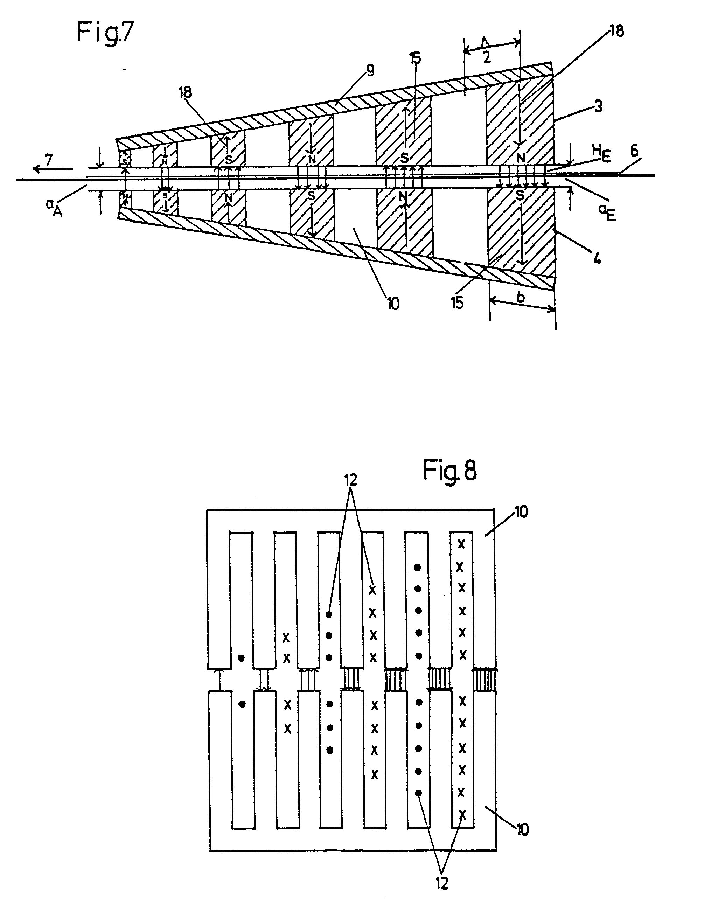

In den Figuren 5–7 sind Beispiele hierfür angegeben. Zu den Prinzipien der Ausbildung einer optimalen Feldgeometrie gehört, dass am Eingang der Schicht (6) in die Magnetteppichanordnung (3, 4) die Feldstärke H$_E$ möglichst hoch ausgelegt wird. Der Abstand $a_E$ der beiden Magnetteppiche (3, 4) wird am Eingang stets möglichst klein gewählt. Die mechanische Führung und das Verhalten der magnetischen Dispersion begrenzen den Abstand nach unten. Die Polbreite kann am Eingang zugunsten einer Feldstärkenerhöhung etwas grösser gewählt werden (Figuren 5, 7).

Umgekehrt liegen die Verhältnisse am Ausgang der Schicht aus der Magnetanordnung (3, 4). Hier sollte der Abstand der Pole einer Kette ($\frac{\Lambda}{2}$) mög-lichst klein dimensioniert sein (Fig. 5, 7), damit sich möglichst räumlich kleine magnetische Bereiche in der Schicht ausbilden. Verringert man aber den Abstand $\frac{\Lambda}{2}$ zu stark, so reicht das Streufeld mit der nötigen Stärke nicht mehr bis zum gegenüberliegenden Pol, sondern bevorzugt den rechts und links liegenden Pol. Der Abstand $a_A$ muss daher genau wie am Eingang möglichst kleingehalten werden. Die Grenze nach unten ist auch hier wie am Eingang durch die Führung des Schichtträgers und die Eigenschaften der magnetischen Dispersion gegeben, so dass sich als optimal im allgemeinen ein konstanter Abstand a = $a_E$ = $a_A$ ergibt.

Zur optimalen Feldgeometrie gehört auch, dass das Streufeld der Gesamtanordnung der Magnetteppiche (3, 4) beim Verlassen der Schicht (6) nicht die monoton periodische Abnahme des Löschfeldes stört (Fig. 5, 6, 7, 10), d.h., dass der Ansatzpunkt der Feldlinien des Gesamtstreufeldes der Anordnung auf die gesamte Länge der Magnetteppiche (3, 4) verteilt wird.

Die Überlegungen über die optimale Feldgeometrie wird dahingehend zusammengefasst, dass der Abstand (a) zwischen den beiden Magnetteppichen (3, 4) möglichst von Anfang bis Ende klein und gleichbleibend sein sollte (1–3 mm). Die von den Magneten zur Verfügung gestellte magnetische Energie sollte vom Anfang zum Ende hin abnehmen, d.h. das Magnetvolumen sollte immer kleiner werden.

Der Aufbau der Magnetkreise kann aus Stab-und/oder Blockmagneten erfolgen. Bevorzugt werden die hochkoerzitiven Magnetmaterialien mit hohem Energieprodukt, wie Bariumferrit- und Seltenerdmagnete. Die Blockmagnete (16) aus Bariumferrit (Fig. 6) werden häufig über die kurze Formachse magnetisiert (Pfeile 18) und kombiniert mit weichmagnetischem Material (9) mit hoher Sättigungsmagnetisierung eingesetzt. Fig. 6 zeigt ein Beispiel, in dem die Abnahme des Feldes (8) durch Verkürzung der Anlagefläche zwischen hart- und weichmagnetischem Material erreicht wird. Bei ähnlichem Aufbau können auch noch die

Masse b und Λ/2 in Laufrichtung der Speicherschicht verringert werden.

Magnetteppiche mit Seltenerdmagneten wird man wegen des erhöhten Energieproduktes dieses Materials anders konstruieren. Die Figur 7 zeigt eine Skizze. Die Stabmagnete 15 aus CoSm weisen mit der magnetischen Vorzugsachse 18 senkrecht zur Schicht 6. Ihr Volumen (Tiefe und Länge) nimmt in Pfeilrichtung (7) ab. Auf der Rückseite dient ein weichmagnetischer Flussleiter (9) der Verringerung des Entmagnetisierungsfaktors der einzelnen Magnetkreise. Zwischen den Magneten 15 ist unmagnetisches Füllmaterial (10) angebracht.

Wendet man Elektromagnetsysteme an, so müssen diese beim Giessvorgang zur Vermeidung von Explosionen meist mit hohem technischen Aufwand fremd belüftet werden. Andererseits bieten sie den Vorteil, dass sich die Felder durch Stromänderung leicht verändern lassen und damit den jeweiligen Pigment- und Dispersionsbedingungen angepasst werden können.

Konstruktion und Fertigung der Elektromagnetsysteme lehnen sich an die von Elektromotoren, besonders Linearmotoren, an. Im Prinzip handelt es sich wieder um zwei Ketten von Magnetkreisen, wie bei den Permanentmagnetsystemen. Dies führt zu zwei Kämmen aus weichmagnetischem Material 10 (Fig. 8), in deren Nuten die stromführenden Drähte (12) eingelegt sind. Eine Methode, um den Strom in den einzelnen Nuten und damit das wirkende Feld verändern zu können, besteht darin, dass zwischen den Zinken der Kämme elektrische Widerstände parallel zu den Windungen geschaltet werden. Auch die Zahl der stromführenden Drähte (12) kann, wie in Fig. 8 gezeigt, verändert werden.

Es wurden Anordnungen beschrieben, bei denen die Ausrichtung der Pigmente durch ein senkrecht zur Bandoberfläche stehendes in der Richtung wechselndes und abnehmendes Feld erreicht wird.

Zur Erfindung gehört ausserdem, dass die Senkrechtstellung der Pigmente durch Zusatzanordnungen vorbereitet wird, um bessere Ergebnisse zu erzielen. Diese Zusatzeinrichtungen bewirken:

Eine Ausrichtung der Pigmente in Bandlaufrichtung vor dem Eintritt der Pigmente in die bisher beschriebene Magnetanordnung,

eine Annäherung an die Senkrechtstellung vor dem Eintritt der Pigmente in die bisher beschriebene Magnetanordnung.

Sie können einzeln oder in Kombination den Magnetteppichanordnungen (3, 4) vorangestellt werden.

Die Ausrichtung von Pigmenten in Bandlaufrichtung ist Stand der Technik und wird daher hier nicht im einzelnen ausgeführt. Häufig wird das Magnetfeld zweier sich gegenüberstehender gleichnamiger Pole benutzt. Der Schichtträger wird auf der Symmetrielinie zwischen den Polen durchgeführt.

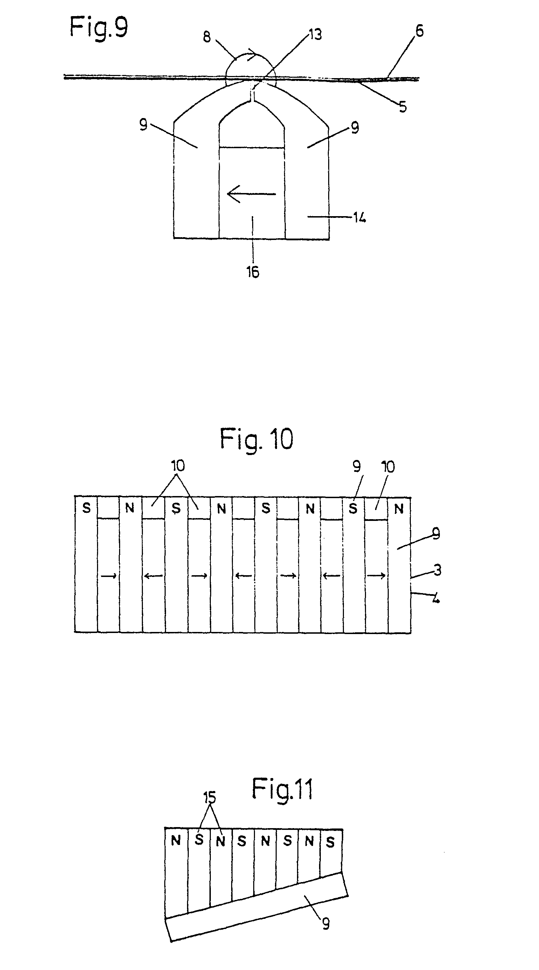

Das Ausrichten der Pigmente bzw. die Annäherung an die Senkrechtstellung der Pigmente erreicht man dadurch (Fig. 9), dass man den mit der flüssigen Schicht 6 bedeckten Schichtträger (5) direkt über einen 0,1 bis 1 mm breiten Spalt (13) eines magnetischen Kreises 14 aus Permanentmagneten 16 und weichmagnetischen Flussleiterteilen 9 führt. Aus dem angedeuteten Verlauf des Magnetfeldes (8) ersieht man, dass die Schicht (6) im Auslauf im wesentlichen einem senkrecht zur Bandoberfläche stehenden Magnetfeld unterworfen ist.

Bei der Herstellung der Schichten nach dem erfindungsgemässen Verfahren werden an die Trocknung erhöhte Genauigkeitsanforderungen gestellt. Es sind jedoch grundsätzlich keine andersartigen Kontrollsensoren oder Konstruktionsprinzipien wie bei der konventionellen Herstellung magnetischer Aufzeichnungsmaterialien anzuwenden. Eine Trocknung der nassen Magnetschicht in gegenströmender Luft mit genauer Temperaturüberwachung ist eine erprobte Möglichkeit. Eine genauere Einhaltung der geforderten Temperaturen bzw. Trocknungsbedingungen lässt sich durch mehrere quer zur Schichtträgerlaufrichtung aufeinanderfolgende, verschiedenartige und geregelte Luftströme erreichen.

In einem Fall wird zur Verfestigung der Dispersion auf dem Schichtträger ein in Temperatur und Windgeschwindigkeit einstellbarer Luftstrom gegen die Laufrichtung geblasen. Der Luftstrom kann auch im mittleren Drittel einer Wechselfeldmagnetanordnung senkrecht zur Strömungsrichtung abgeleitet werden, so dass im ersten Drittel eine noch hohe Beweglichkeit der Pigmente gegeben ist, und im letzten Drittel eine verstärkte Verfestigung der Schicht erfolgt. Auch kann der Luftstrom parallel zur Schichtebene, jedoch senkrecht zur Laufrichtung geblasen werden. Welche Methoden für den Einzelfall am günstigsten ist, kann durch den Fachmann von Fall zu Fall erprobt werden.

Bewährt hat sich auch, die Magnetanordnung durch Flüssigkeiten wie Wasser an den entsprechenden Stellen zu erhitzen oder zu kühlen, damit sich die geforderten Trocknungsstellen ergeben.

Ein modernes Mittel ist der Einsatz von Peltierelementen, mit denen verschiedene Stellen der Magnetanordnung erwärmt oder abgekühlt werden können.

Der Einsatz von Strahlung zur Trocknung (UV-Strahlung, Ultrarot-Strahlung) ist bekannt.

Die Führung des Schichtträgers durch die Magnetanordnung kann durch Walzen oder Leitbleche erfolgen. Auch das Prinzip der Schwebeführung ist einsetzbar.

Es wird nun auf die Bewertung des Grades der Senkrechtstellung eingegangen werden. Hierzu gibt es verschiedene Möglichkeiten.

Magnetische Messungen

Um die Lage der Pigmente in einer Magnetschicht zu bestimmen, werden die Hystereseschleifen der Schicht in den drei Raumrichtungen gemessen.

In Bandlaufrichtung (längs) Quer zur Bandlaufrichtung in der Schichtebene (quer) Senkrecht zur Schichtebene

Bei den beiden ersten Richtungen kann der äussere Entmagnetisierungsfaktor durch geeignete Probenform meist Null gesetzt werden, da die Schichtausdehnung grösser als die Schichtdicke ist.

Grosse Schwierigkeiten bereitet die Messung in Senkrechtrichtung. Das Messfeld muss die Probe senkrecht zur Schichtoberfläche magnetisieren, so dass ein sehr grosses entmagnetisierendes Feld entsteht. Der Entmagnetisierungsfaktor liegt je nach Masssystem bei 1 bzw. 4 π. Durch das hohe entmagnetisierende Feld müssen sehr hohe Felder (grösser 796 $\frac{kA}{m}$) zum Magnetisieren angewendet werden. Aufgrund dieses Sachverhaltes hat sich ein Vibrationsmagnetometer in Verbindung mit einem Weissschen Magneton gut bewährt.

Für den tabellarischen Vergleich von Proben reicht meist die Angabe der $B_r/B_s$-Werte und eventuell zusätzlich der Koerzitivfelder. Ausser magnetischen Messungen zeigen auch mikroskopische und rastermikroskopische Aufnahmen Unterschiede zwischen den Oberflächen der verschiedenen Strukturen.

Hat man als Pigment einkristalline Teilchen vorliegen (z.B. $CrO_2$), so kann die Ausrichtung über Röntgenaufnahmen ermittelt werden. Hier besteht der Vorteil der Volumenerfassung.

Indirekte Aussagen lassen sich auch durch speichertechnische Messungen gewinnen. So kann man die gegossene Schicht als Floppy-Disc verwenden und die Pegelschwenkungen während des Abspielens verfolgen. Räumlich isotrope Schichten und in der Speicherebene isotrope Schichten und Schichten mit Senkrechtorientierung zeigen keine Pegelschwankungen. Schon geringe Pegelschwankungen lassen auf andere Schichttypen schliessen.

Eine weitere speichertechnische Prüfung ergibt sich beim Heim-Video. Hier kommen nur sehr kurze Wellenlängen zur Anwendung, so dass der abgetastete Pegel ein gutes Mass für den erreichten Grad der Senkrechtstellung des Pigmentes sein kann.

Da die beschriebenen Messverfahren zur Beurteilung der Senkrechtstellung noch Zweifel offen lassen können, bedient man sich auch oft eines Vergleiches von Prüfproben mit Referenzproben aus bereits bekanntem Probenmaterial, z.B. Proben mit längsgerichteten Pigmentteilchen. Solches Probenmaterial kann man durch ein entsprechendes Magnetsystem beim Giessvorgang herstellen. Diese Technik ist allgemein bekannt.

Ausführungsbeispiel:

Die Versuche wurden mit erfindungsgemässen Magnetsystemen an einer üblichen Magnetbandgiessmaschine durchgeführt. Als Giesssystem wurde ein Schlitzgiesser, bei dem die Giessflüssigkeit durch einen Schlitz gegen eine Walze gedrückt wird, verwendet. Dieses System besitzt am Giesser keine Magnete, so dass magnetische Kraftwirkungen auf die Pigmentteilchen ausgeschlossen sind. Durch die Strömung am Schlitz werden die Teilchen etwas in Bandlaufrichtung ausgerichtet. Für den Trocknungsvorgang standen die üblichen Regelungen der Belüftungsführung und Temperatur zur Verfügung.

Erfindungsgemässe Magnetsysteme

Zunächst werden zwei erfindungsgemässe Magnetteppichsysteme beschrieben:

1. Typ (Fig. 10) Magnetteppichsystem aus gleichen Einzelteilen gefertigt. Die beiden Magnetteppiche (3, 4) bestehen aus aneinandergereihten gleichen Magnetkreisen. Die Abnahme der auf die Schicht wirkenden Felder erfolgt durch die Schrägstellung der Magnetteppiche (3, 4). Die einzelnen magnetischen Kreise bestehen aus blockförmigen Bariumferritmagneten 16 der Abmessung 3 × 21 × 50 mm, die über die kürzeste Kante magnetisiert sind. Solche Magnete liefern z.B. die Edelstahlwerke Dortmund unter der Materialbezeichnung 300 K. Rechteckige Schienen aus weichmagnetischem Leitmaterial 9 der Abmessung 3 × 25 × 200 flankieren die Bariumferritsteine, die im Ziegelmauerverbund angeordnet sind. Der freie Raum 10 ist mit unmagnetischem Füllmaterial ausgefüllt. Es wurde eine Folge von insgesamt 50 Nord- und Südpolen (N, S) verwendet. Diese magnetischen Kreise sind in nicht dargestelltes unmagnetisches Material gefasst. Die Eingangsöffnung zwischen den Magneten beträgt 1,5 mm bis 2,0 mm. Der Öffnungswinkel ist zwecks Optimierung der Herstellungsbedingungen veränderbar. Die Ausgangsöffnung kann daher zwischen 1,5 mm und 18 mm eingestellt werden. Die maximale Feldstärke am Eingang der Anordnung betrug 79,6–87,6 KA/m.

2. Typ (Fig. 11) mit ungleichen Magneten aus CoSm und weichmagnetischer Rückschicht. Dieser Magnetteppichtyp ist in Fig. 5 im Prinzip dargestellt. Bei der Ausführungsform im Beispiel (Fig. 11) konnte auf das unmagnetische Material zwischen den «Stabmagneten» (15) verzichtet werden, da CoSm eine genügend starke Anisotropie besitzt. Diese Stabmagnete von etwa 3 mm Breite wurden auf einen weichmagnetischen Flussleiter 9 von 5 mm Dicke gestellt, um den Entmagnetisierungsfaktor der Kreise herabzudrücken. Die Stabmagnete hatten am Anfang eine Länge von 10 mm, die auf einer Länge von etwa 30 cm auf null abfiel. Beim Einsatz in der Giessmaschine besassen die magnetischen Nutzflächen einen Abstand von etwa 2–3 mm. Sie konnten aber auch gegeneinander verkippt werden.

Die den Magnetteppichen (3, 4) vorgesetzten Zusatzmagnete haben erfindungsgemäss die Aufgabe, die Senkrechtstellung zu erleichtern. Zunächst erfolgt eine Längsausrichtung der Pigmentteilchen mit zwei Leisten, deren gleichnamige Pole sich gegenüberstehen. Das maximal einwirkende Feld in Bandlaufrichtung betrug 87,6 kA/m. Die Spaltleisten, die zur Vorbereitung der Senkrechtstellung dienen, sind im Prinzip in Fig. 9 dargestellt. Der blockförmige Permanentmagnet 16 besass einen Querschnitt von 3 × 23 mm und war aus Bariumferrit (300 K). Das weichmagnetische Joch 9 hatte eine Gesamthöhe von 23 mm und eine Gesamtbreite von 10 mm. Die Spalte der zwei hintereinanderstehenden Magnete betrugen 0,4 und 0,8 mm.

**Patentansprüche**

1. Verfahren zur Herstellung eines magnetischen Aufzeichnungsmaterials, bestehend aus einem Schichtträger und mindestens einer darauf aufgebrachten magnetischen Aufzeichnungsschicht, welche magnetisch anisotrope Pigmente, welche im Bindemittel dispergiert sind, enthält, und wobei die magnetische Aufzeichnungsschicht nach dem Auftragen im flüssigen Suspensionszustand einer magnetischen Orientierungsbehandlung mittels eines magnetischen Feldes im wesentlichen in Richtung senkrecht zur Oberfläche der aufgetragenen Schicht und senkrecht zur Laufrichtung sowie einer Trocknungsbehandlung unterzogen wird, dadurch gekennzeichnet, dass
— das magnetische Aufzeichnungsmaterial (5, 6) eine Orientierungsbehandlung durch beiderseits des magnetischen Aufzeichnungsmaterials symmetrisch angeordnete identische Ketten (3, 4) von magnetischen Einzelkreisen (9, 10, 15, 16, 18), enthaltend Permanent- oder Elektromagnete, durchläuft, wobei die Polarität der Magnete der einen Kette entgegengesetzt zu der Polarität der entsprechenden Magnete der anderen Kette ist und wobei die Feldorientierung in Laufrichtung (7) laufend um 180° wechselt und wobei der Betrag der Feldstärke in Laufrichtung ständig abnimmt, so dass sich durch den Entmagnetisierungseffekt räumlich kleine Bereiche mit verringerter Streufeldenergie bilden,
— die räumliche Orientierung der magnetischen Pigmente in der getrockneten magnetischen Schicht (6) durch Wahl des Trocknungszeitpunkts in Bezug auf die Orientierungsbehandlung im magnetischen Wechselfeld bestimmt wird.

2. Verfahren nach Anspruch 1, dadurch gekennzeichnet, dass dem wechselnden magnetischen Feld Zusatzfelder vorgelegt sind, die eine Ausrichtung der Pigmentvorzugsachse in Laufrichtung und/oder vorbereitende Senkrechtausrichtung bewirken.

3. Verfahren nach Anspruch 2, dadurch gekennzeichnet, dass zur Erzeugung von Zusatzfeldern, die eine teilweise Ausrichtung in Laufrichtung bewirken sollen, Anordnungen wie gleichnamige Pole, die sich gegenüberstehen, benutzt werden.

4. Verfahren nach Anspruch 2, dadurch gekennzeichnet, dass eine vorbereitende Stellung in Senkrechtausrichtung durch den Spalt mehrerer Jochmagnete erreicht wird, wobei die Feldrichtung in den Spalten nacheinander wechselt.

5. Verfahren nach den Ansprüchen 1 und 2, dadurch gekennzeichnet, dass die Trocknungsbehandlung der magnetischen Aufzeichnungsschicht während der Orientierungsbehandlung einsetzt und abgeschlossen wird.

6. Verfahren nach den Ansprüchen 1 bis 2, dadurch gekennzeichnet, dass die Trocknungsbehandlung der magnetischen Aufzeichnungsschicht nach Abschluss der Orientierungsbehandlung einsetzt und abgeschlossen wird.

7. Verfahren nach den Ansprüchen 1 bis 2, dadurch gekennzeichnet, dass die Trocknungsbehandlung der magnetischen Aufzeichnungsschicht während des Verlassens der Orientierungsbehandlung einsetzt und abgeschlossen wird.

8. Verfahren nach den Ansprüchen 1 bis 2, dadurch gekennzeichnet, dass die Trocknungsbehandlung der magnetischen Aufzeichnungsschicht bereits während des Eintritts in die Orientierungsbehandlung erfolgt.

9. Verfahren nach den Ansprüchen 1 bis 2, dadurch gekennzeichnet, dass die Orientierungsbehandlung der magnetischen Aufzeichnungsschicht durch eine zusätzliche Feldkomponente in Laufrichtung (7) ergänzt wird, deren Grösse 5 bis 25% der maximalen Feldkomponente senkrecht zur Laufrichtung beträgt, welches durch eine leichte Verschiebung der beiden Ketten (3, 4) gegeneinander in Laufrichtung bewirkt wird.

10. Verfahren nach Anspruch 3, dadurch gekennzeichnet, dass die Trocknungsbehandlung der magnetischen Aufzeichnungsschicht während der Einwirkung der Orientierungsbehandlung sowie der zusätzlichen Feldeinwirkung in Laufrichtung erfolgt.

11. Verfahren nach Anspruch 1, dadurch gekennzeichnet, dass die Abnahme der Feldstärke des magnetischen Wechselfeldes dadurch erreicht wird, dass sich der Abstand zwischen den Polketten (3, 4) vom Einlauf des magnetischen Aufzeichnungsmaterials in das Wechselfeld bis zum Auslaufen ständig vergrössert.

12. Verfahren nach Anspruch 1, dadurch gekennzeichnet, dass das zur Felderzeugung zur Verfügung stehende Magnetvolumen der Permanentmagnete (15, 16, 18) für die einzelnen magnetischen Kreise vom Einlauf des magnetischen Aufzeichnungsmaterials bis zum Auslauf aus der Magnetanordnung hin abnimmt.

**Claims**

1. Process for producing a magnetic recording material comprising a film base and at least one magnetic recording layer imposed on it, which contains magnetically anisotropic pigments, which in turn are dispersed in the binding agent, and whereby after the magnetic recording layer has been deposited by suspension in liquid, it is magnetically orientated using a magnetic field, essentially in a direction which is perpendicular to the surface of the deposited layer and perpendicular to the running direction of the tape, and is dried, characterised in that
— the magnetic recording material (5, 6) is orientated by identical chains (3, 4) of magnetic circles (9, 10, 15, 16, 18) which are symmetrical on both sides of the magnetic recording material and which comprise permanent magnets and electromagnets, whereby the poles of the magnets on one chain are opposite to the poles of the corresponding magnets on the other chain, and whereby the field orientation continuously alternates around 180° in the direction of running (7) and whereby the amplitude of the field strength constantly decreases in the direction of running, so that small domains having reduced stray field energy are formed by demagnetisation,

- the space orientation of the magnetic pigments in the dried magnetic layer (6) is determined by selecting the drying time with reference to the orientation procedure in the alternating magnetic field.

2. Process according to Claim 1, characterised in that additional fields are added to the alternating magnetic field, which causes the preferred pigment axis to be aligned in the direction of running and/or at first perpendicularly.

3. Process according to Claim 2, characterised in that arrangements such as like-poles facing one another are used, to produce the additional fields, which should cause a partial alignment in the direction of running.

4. Process according to Claim 2, characterised in that a preliminary perpendicular alignment is achieved by separating several yoke magnets, whereby the field direction succesively alternates in the gaps.

5. Process according to Claims 1 and 2, characterised in that the magnetic recording layer is dried within the time that it is orientated.

6. Process according to Claims 1 and 2, characterised in that the magnetic recording layer is dried after it has been orientated.

7. Process according to Claims 1 and 2, characterised in that the magnetic recording layer is dried when the orientation procedure is terminating.

8. Process according to Claims 1 and 2, characterised in that the magnetic recording layer is dried when the orientation procedure is commencing.

9. Process according to Claims 1 and 2, characterised in that the magnetic recording layer is orientated by an additional field component in the direction of running (7), whose magnitude is between 5 and 25% of the maximum field component perpendicular to the direction of running, which is caused by slightly displacing both chains (3, 4) towards one another in the direction of running.

10. Process according to Claim 3, characterised in that the magnetic recording layer is dried while being orientated and during the presence of the additional field in the direction of running.

11. Process according to Claim 3, characterised in that the field strength of the alternating magnetic field is decreased by constantly increasing the distance between the pole chains (3, 4) from the time that the magnetic recording material enters the alternating field until it leaves.

12. Process according to Claim 1, characterised in that the field-producing magnet volume of the permanent magnets (15, 16, 18) for the individual magnetic circles, decreases from the time that the magnetic recording material enters the magnet arrangement until it leaves.

**Revendications**

1. Procédé de réalisation d'un matériau d'enregistrement magnétique, constitué par un support de couche et par au moins une couche d'enregistrement magnétique appliquée sur celui-ci, laquelle contient des pigments magnétiquement anisotropes qui sont dispersés dans le liant, la couche d'enregistrement magnétique étant soumise, après apport à l'état de suspension liquide, à un traitement d'orientation magnétique au moyen d'un champ magnétique de direction sensiblement perpendiculaire à la surface de la couche apportée et perpendiculaire à la direction du déplacement, ainsi qu'à un traitement de séchage, caractérisé par le fait que

- le matériau d'enregistrement magnétique (5, 6) passe par un traitement d'orientation par des chaînes (3, 4) de circuits magnétiques individuels (9, 10, 15, 16, 18), contenant des aimants permanents ou des électroaimants, agencées symétriquement des deux côtés du matériau d'enregistrement et identiques, la polarité des aimants de la première chaîne étant opposée à la polarité des aimants correspondants de l'autre chaîne, et l'orientation du champ changeant de 180°, de manière alternée quand on suit la direction du déplacement (7), la valeur de l'intensité du champ décroissant constamment en suivant la direction du déplacement, de sorte que des domaines tridimensionnellement petits, ayant une énergie de champ de dispersion réduite, se forment du fait de l'effet de démagnétisation,

- l'orientation spatiale des pigments magnétiques dans la couche magnétique (6) séchée est déterminée par le choix de l'instant de séchage rapporté au traitement d'orientation dans le champ magnétique alterné.

2. Procédé selon revendication 1, caractérisé par le fait que des champs supplémentaires sont placés devant le champ magnétique alternant et provoquent une orientation de l'axe préférentiel des pigments dans la direction du déplacement et/ou une orientation perpendiculaire préparatoire.

3. Procédé selon revendication 2, caractérisé par le fait que, pour produire des champs supplémentaires devant provoquer une orientation partielle dans la direction du déplacement, on utilise des agencements tels que des pôles de même nom qui sont en vis-à-vis.

4. Procédé selon revendication 2, caractérisé par le fait qu'une position préparatoire en direction perpendiculaire est obtenue par l'entrefer de plusieurs aimants à culasse, la direction du champ changeant de manière alternée dans les entrefers successifs.

5. Procédé selon les revendications 1 et 2, caractérisé par le fait que le traitement de séchage de la couche d'enregistrement magnétique est commencé et terminé pendant le traitement d'orientation.

6. Procédé selon les revendications 1 à 2, caractérisé par le fait que le traitement de séchage de la couche d'enregistrement magnétique est commencé et terminé après la fin du traitement d'orientation.

7. Procédé selon les revendications 1 à 2, caractérisé par le fait que le traitement de séchage de la couche d'enregistrement magnétique est commencé et terminé lors de la sortie du traitement d'orientation.

8. Procédé selon les revendications 1 à 2, caractérisé par le fait que le traitement de séchage de la couche d'enregistrement magnétique s'effectue déjà pendant l'entrée dans le traitement d'orientation.

9. Procédé selon les revendications 1 à 2, caractérisé par le fait que le traitement d'orientation de la couche d'enregistrement magnétique est complété par une composante de champ supplémentaire dans la direction du déplacement (7), la grandeur de cette composante étant de 5 à 25% de la composante maximale perpendiculaire à la direction du déplacement, cela étant obtenu par un léger décalage des deux chaînes (3, 4) l'une par rapport à l'autre dans la direction du déplacement.

10. Procédé selon revendication 9, caractérisé par le fait que le traitement de séchage de la couche d'enregistrement magnétique s'effectue pendant l'action du traitement d'orientation ainsi que pendant l'action de champ supplémentaire sur la direction du déplacement.

11. Procédé selon revendication 1, caractérisé par le fait que la décroissance de l'intensité du champ magnétique alterné est obtenue par le fait que l'intervalle entre les chaînes de pôles (3, 4) augmente constamment de l'entrée à la sortie du matériau d'enregistrement magnétique dans le champ alterné.

12. Procédé selon revendication 1, caractérisé par le fait que les aimants permanents (15, 16, 18) pour les circuits individuels magnétiques disposent, pour la production de champ, d'un volume qui décroît de l'entrée du matériau d'enregistrement magnétique jusqu'à la sortie de l'agencement d'aimants.

Fig. 1

Fig. 2

Fig. 3

Fig. 4

11

Fig.5

Fig.6

13

Fig.7

Fig. 8

Fig.9

Fig. 10

Fig.11